Europäisches Patentamt

European Patent Office

Office européen des brevets

(11) Numéro de publication: **0 050 999**
**B1**

(12) **FASCICULE DE BREVET EUROPEEN**

(45) Date de publication du fascicule du brevet: **19.06.85**

(21) Numéro de dépôt: **81401492.4**

(22) Date de dépôt: **25.09.81**

(51) Int. Cl.⁴: **B 62 D 1/18**

(54) Colonne de direction réglable en hauteur.

(30) Priorité: **13.10.80 FR 8021809**

(43) Date de publication de la demande:
**05.05.82 Bulletin 82/18**

(45) Mention de la délivrance du brevet:
**19.06.85 Bulletin 85/25**

(84) Etats contractants désignés:
**AT BE DE GB IT LU NL SE**

(56) Documents cités:
**DE-A-2 727 270**
**FR-A-2 446 212**
**US-A-4 102 218**

(73) Titulaire: **CYCLES PEUGEOT Société dite:**
**Beaulieu**
**F-25700 Valentigney (FR)**

(72) Inventeur: **Fourrey, François**
**Rue du Petit Chênois**
**F-25200 Montbeliard (FR)**
Inventeur: **Mauffrey, Jean-François**
**8 Rue du Stade Andelnans**
**F-90400 Danjoutin (FR)**

(74) Mandataire: **Polus, Camille et al**
**c/o Cabinet Lavoix 2, Place d'Estienne d'Orves**
**F-75441 Paris Cedex 09 (FR)**

Courier Press, Leamington Spa, England.

EP 0 050 999 B1

## Description

Le confort du conducteur d'un véhicule automobile est maintenant considéré comme un facteur important de la sécurité de la conduite de ce véhicule. C'est pourquoi un certain nombre de voitures sont actuellement munies d'un colonne de direction réglable en hauteur, c'est-à-dire d'une colonne susceptible de pivoter autour d'un point d'articulation plus ou moins éloigné du volant, le meilleur réglage étant obtenu lorsque la colonne pivote autour de l'axe d'articulation de l'arbre de direction qui la traverse.

Comme décrit dans le US—A—4 102 218, un dispositif de verrouillage est alors monté au droit du système d'articulation et permet au conducteur agissant directement sur ce dispositif de régler la position de la colonne de direction avant de mettre en route le véhicule. La position du volant peut ainsi être adaptée à la taille du conducteur. Toutefois on constate que ce réglage n'est pas suffisant pour apporter un confort réel, car l'attitude de conduite varie selon les conducteurs et peut même quelquefois varier au cours d'un même parcours.

La présente invention a pour but de remédier à ces inconvénients en réalisant une colonne de direction susceptible d'être réglée à tout moment par le conducteur, exactement en position de conduite.

Cette invention a en effet pour objet une colonne de direction traversée par un arbre de direction articulé à son extrémité inférieure et solidaire d'un volant à son extrémité supérieure, articulée sur un support fixe autour d'un axe horizontal coaxial à l'axe d'articulation de l'arbre de direction, un dispositif de verrouillage permettant de verrouiller la colonne de direction dans plusieurs positions correspondant à différentes inclinaisons de cette dernière par rapport à l'horizontale, caractérisée en ce que le dispositif de verrouillage est monté entre une plaque de support de commandes annexes solidaire de la colonne de direction et le support fixe, et en ce que cette plaque supporte un levier coudé pivotant parallèlement à celle-ci, entre une position de repos écartée du dispositif de verrouillage, une position d'engagement avec le dispositif de verrouillage et une position de déverrouillage, une tige courbe de manoeuvre étant fixée au levier coudé de telle façon que son extrémité soit largement en retrait par rapport au volant lorsque le levier coudé est dans sa position de repos, et à proximité immédiate du volant lorsque le levier coudé est dans ses deux autres positions, le levier coudé étant rappelé élastiquement dans sa position de repos, correspondant au verrouillage de la colonne, dès qu'il est libéré par la conducteur.

Sur une telle colonne le déverrouillage s'effectue en deux étapes. En effet, le conducteur doit d'abord amener le levier coudé en position d'engagement avec le dispositif de verrouillage et la tige de manoeuvre à proximité immédiate du volant avant de provoquer le déverrouillage et de pouvoir modifier la position du volant. Le déplacement de déverrouillage peut donc être commandé par un conducteur ayant les mains exactement en position de conduite. Le réglage de la colonne est alors effectué dans l'attitude de la conduite, c'est-à-dire en fonction de celle-ci.

Dans un mode de réalisation préféré, la plaque de support des commandes annexes est reliée au support fixe de la colonne par un double compas d'articulation. La colonne présente ainsi une grande résistance aux efforts latéraux qui ne risquent pas de bloquer le dispositif de verrouillage.

La description ci-dessous d'un mode de réalisation donné à titre d'exemple non limitatif, et représenté aux dessins annexés, fera d'ailleurs ressortir les avantages et caractéristiques de l'invention.

Sur ces dessins:

— la fig. 1 est une vue en perspective d'une colonne de direction fixée sur un véhicule et munie des organes de commande accessoires, avant la manoeuvre du dispositif de réglage en hauteur par le conducteur;

— la fig. 2 est une vue analogue à la figure 1, prise au cours deu réglage en hauteur de la colonne par le conducteur;

— la fig. 3 est une vue de côté de la colonne seule;

— la fig. 4 est une vue en plan de la colonne de la figure 3, après retrait du support de fixation au véhicule et arrachement de la colonne elle-même pour faire apparaître les organes de commande du déverrouillage;

— la fig. 5 est une vue éclatée, à plus grande échelle, des organes de déverrouillage représentés sur la figure 4;

— les fig. 6 et 7 des vues partielles de côté, à plus grande échelle, de l'articulation des organes de support de la colonne;

— la fig. 8 est une vue en écorché de l'ensemble de la colonne.

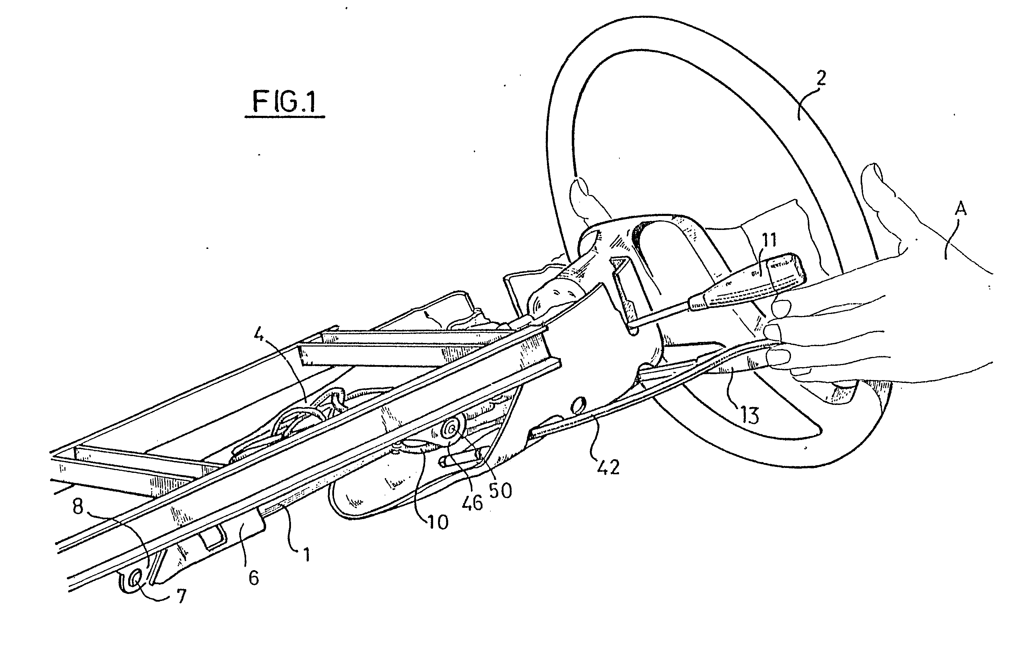

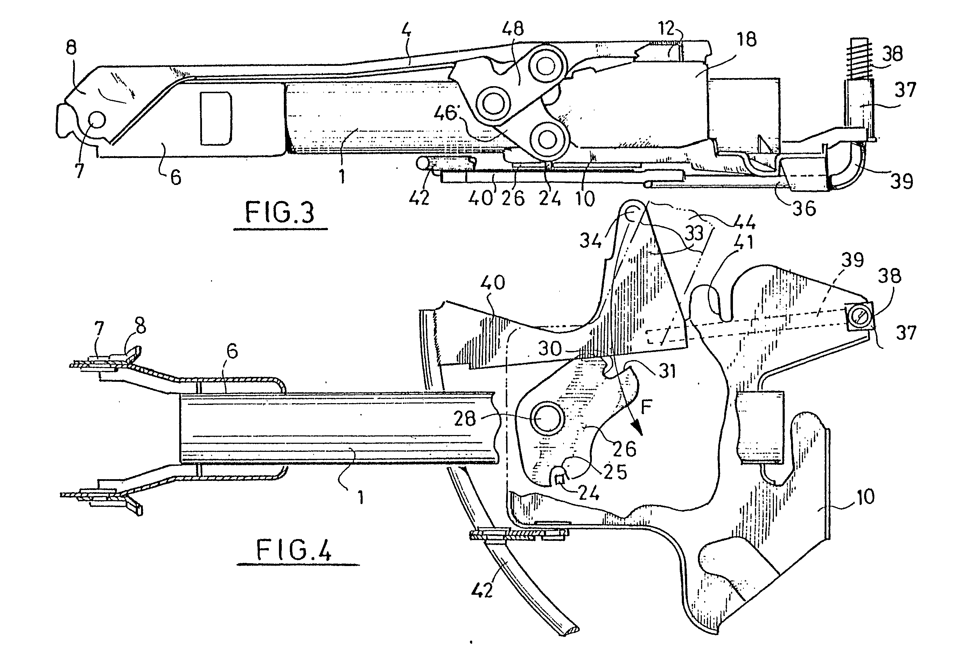

Comme le montrent plus particulièrement les figures 1 à 4, la colonne de direction de l'invention comporte un tube 1 qui est traversé, de la manière habituelle, par l'arbre de direction, à l'extrémité supérieure duquel est monté un volant 2. A son extrémité inférieure le tube 1 est articulé sur une ferrure, ou châssis, 4 constituant un support de fixation sur le véhicule. Dans ce but deux tôles 6 sont fixées en deux points diamétralement opposés du tube 1 et sont traversées chacune par une axe 7, qui traverse également une aile rabattue 8 de la ferrure 4. De préférence les tôles 6 sont repliées vers l'extérieur pour s'écarter l'une de l'autre en s'éloignant du tube 1 (fig. 4) et ménager un logement pour un joint de cardan, ou analogue, qui constitue l'articulation de l'arbre de direction, de sorte que l'axe de pivotement 7 du tube 1 est coaxial à l'articulation de l'arbre de direction. Cette articulation n'a pas été représentée sur la figure 4 pour ne pas compliquer cette figure.

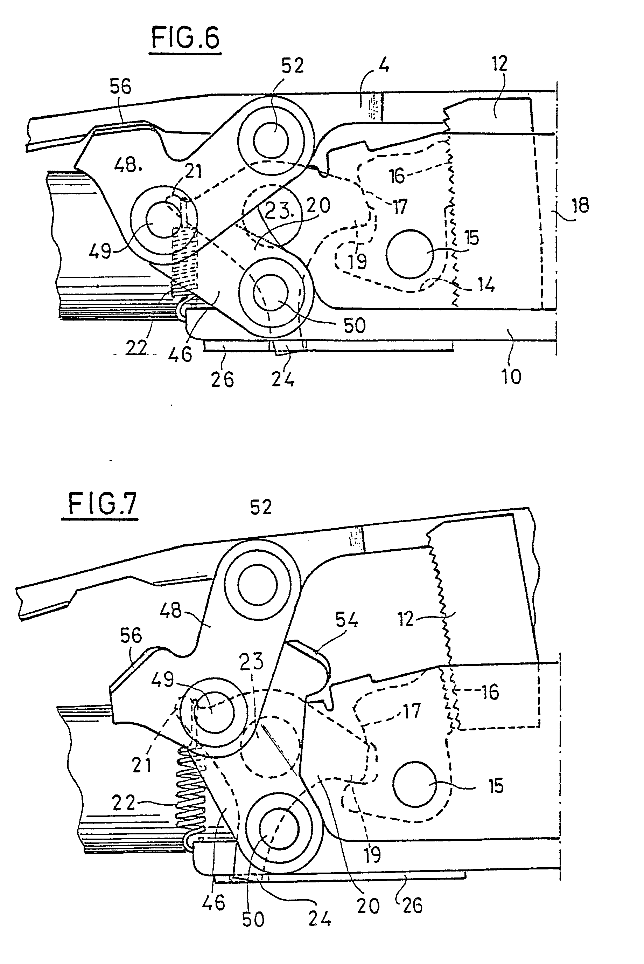

En un point éloigné de l'axe d'articulation 7, c'est-à-dire au voisinage du volant 2, le tube de direction est rendu solidaire, par exemple par soudure, d'une plaque 10 de support des organes de commande annexes tels que commande d'essuie-glace, de phares et autres, dont le levier de manoeuvre 11 ou 13 peut être déplacé par le conducteur pratiquement sans lâcher le volant. La plaque 10, de même que les organes de commande annexes, est dèplacée en même temps que le tube de direction, 1 lors du pivotement de celui-ci. Toutefois un dispositif de verrouillage est monté entre la plaque 10 et la ferrure de support fixe 4 et permet d'immobiliser ces deux organes l'un par rapport à l'autre. Ce dispositif comporte un secteur denté 12, fixé à l'extrémité de la ferrure 4, perpendiculairement au plan général de celleci, de façon que sa denture soit pratiquement centrée sur l'axe de pivotement de la colonne. Le secteur denté 12 coopère avec un cliquet 14 muni d'une denture 16 et monté pivotant sur un axe 15 parallèle à la plaque de support 10, et perpendiculaire à la denture du secteur 12. A l'opposé de la denture 16 le cliquet 14 comporte une face incurvée, de forme générale concave 17 (fig. 6), sur laquelle appuie un bossage latéral 19 d'une came basculante 20 qui pivote autour d'un axe 23 parallèle à l'axe 15.

En fait, dans le mode de réalisation représenté, la came basculante 20 et le cliquet 14 sont montés entre deux platines parallèles dont une seule, 18, est visible sur les dessins. Cette platine extérieure 18 se prolonge au-delà du cliquet 14 et forme une surface d'appui pour le secteur denté 12. La platine intérieure, elle, supporte l'axe d'articulation 15 du cliquet, ainsi que celui 23 de la came basculante 20.

La came 20 comporte un second bossage latéral 21 qui forme un crochet de suspension d'un ressort 22 fixé à son extrémité opposée à la plaque de support 10, et tendant à rapprocher le crochet 21 de cette plaque c'est-à-dire à repousser le bossage 19 vers l'extrémité supérieure de la surface 17 du cliquet 14, ce qui provoque le verrouillage des dentures 16 et 12 ainsi que le montre la figure 6. La came 20 comporte en outre un bras 24 qui traverse une lumière de la plaque 10 et fait saillie à l'extérieur de celle-ci. L'extrémité de ce bras 24 est logée dans une encoche 25 d'une came 26, qui est dans l'ensemble parallèle à la plaque de support 10 et pivote parallèlement à cette plaque autour d'un axe 28 supporté par cette dernière (fig. 4).

La came 26 comporte également une second encoche 30 à son extrémité opposée à l'encoche 25. L'encoche 30 a une section sensiblement semi-circulaire mais sa paroi latérale est prolongée, sur l'un de ses côtés, par une saillie 31 de la came 26.

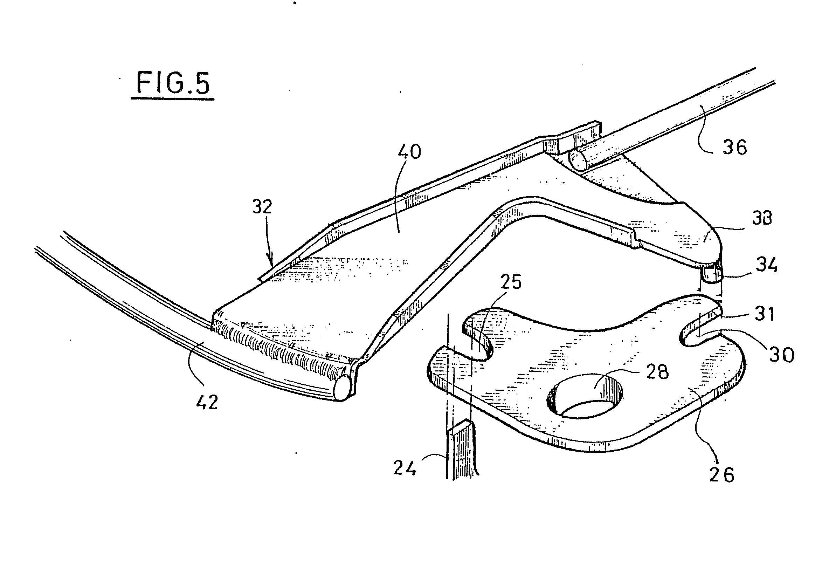

La plaque 10 supporte en outre un levier coudé désigné dans son ensemble par la référence 32, qui comporte un bras d'actionnement 33 muni à son extrémité d'un pion en saillie 34, susceptible de venir s'emboîter dans l'encoche 30 de la came 26 (fig. 5). Le bras d'actionnement 33 est fixé sur une tige 36 qui est recourbée vers le haut pour traverser l'extrémité supérieure de la plaque 10 et un étrier de support 37 fixé sur cette plaque. Au

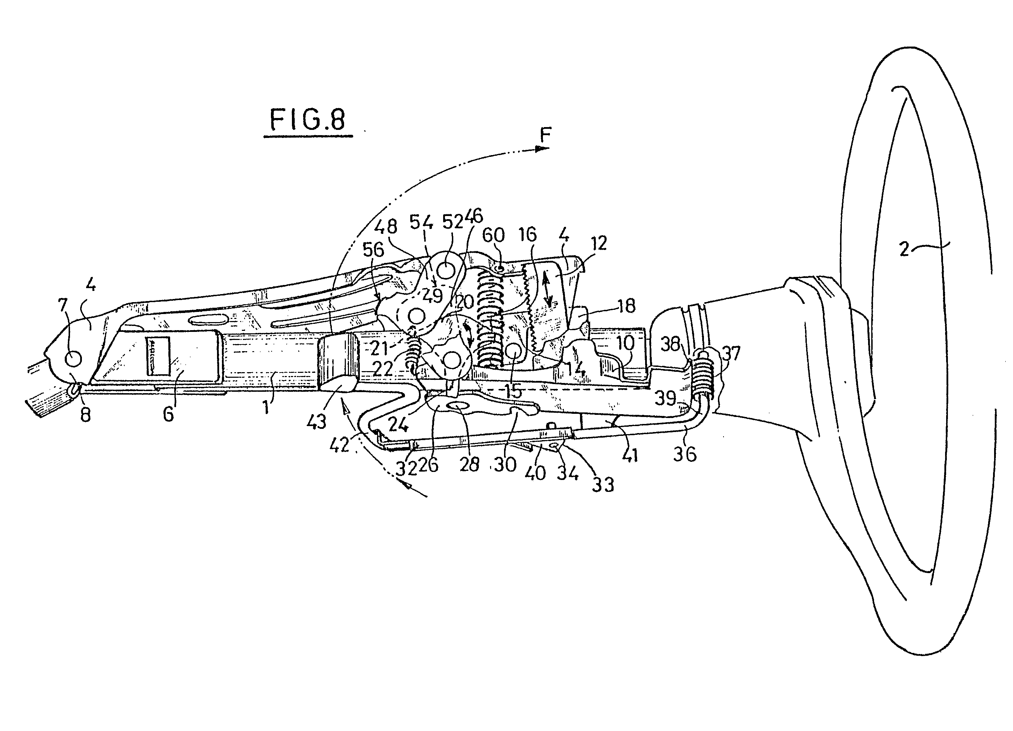

delà de cet étrier 37 la tige 36 est entourée par un ressort hélicoïdal dont une extrémité est fixée sur l'étrier 37, tandis que son extrémité opposée est bloquée dans une fente diamétrale de la tige 36 elle-même. Le bras 33 ainsi que la tige 36 peuvent ainsi pivoter autour de l'axe de la partie de la tige qui traverse l'étrier 37, mais sont rappelés automatiquement en position de repos, c'est-à-dire dans la position représentée sur la figure 4, par l'action du ressort 38. Le bras de manoeuvre 33 est par ailleurs solidaire d'une bras 40, sensiblement aligné avec la tige 36, qui est fixée sur une tige incurvée 42 terminée de préférence par un bouton de manoeuvre 43. La courbure de la tige de manoeuvre 42 est telle que ce bouton de manoeuvre se trouve normalement, en position de repos, un peu plus éloignée du volant 2 que les leviers 11 et 13, de sorte que ceux-ci peuvent être utilisés sand gêne, exactement de la manière habituelle. Toutefois, ainsi que le montrent clairement les figures 1 et 8, cette distance n'est pas très importante et la main du conducteur, indiquée en A sur cette figure, n'a qu'un faible déplacement à effectuer pour atteindre la tige 42.

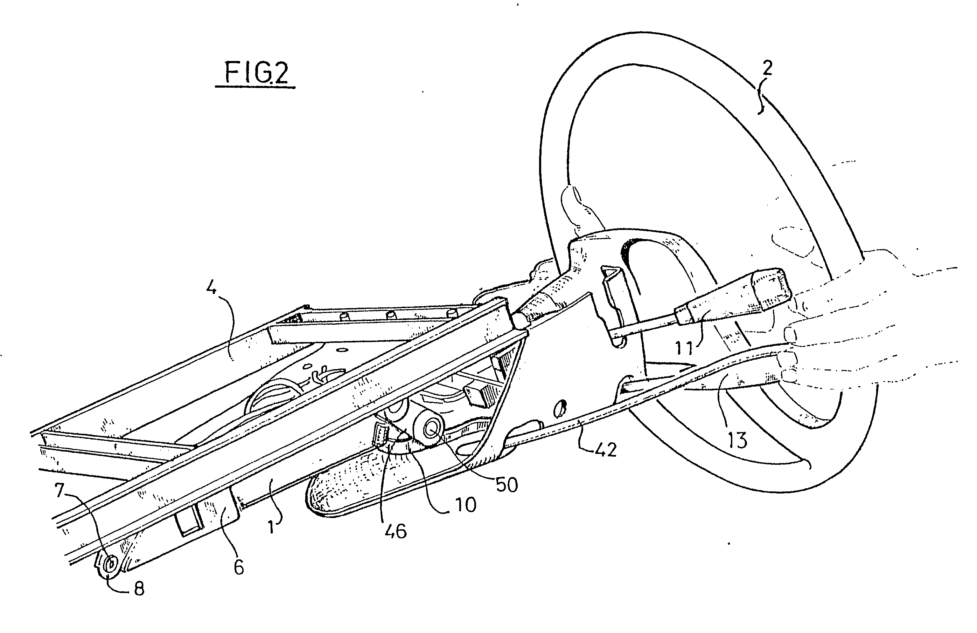

Une traction sur la bouton de manoeuvre 43 provoque le pivotement de la tige 42 et de l'ensemble du levier 32 autour de l'axe de l'étrier 37, c'est-à-dire de l'axe de la partie 39 de la tige 36 qui traverse cet étrier. Ce pivotement, qui s'effectue selon la flèche F de la figure 4, amène le pion 34 du bras de manoeuvre 33 dans l'encoche 30 de la came 26. A ce moment la bouton de manoeuvre de la tige 42 est siffisamment proche du volant 2 pour que le conducteur puisse replacer sa main sur ce volant, dans la position correspondant à une conduite normale, ainsi que le montre la figure 2. Par ailleurs le pion 34 est venu en contact avec la saillie 31 de la came 26, de sorte que la continuation du pivotement de la tige 42 pousse le pion 34 contre cette saillie 31 et provoque le pivotement de la came 26 autour de l'axe 28. Ce pivotement déplace le bras 24 de la came pivotante 20 contre l'action du ressort 22. Le bossage 19 de cette came 20 se déplace dans la concavité de la surface 17 pour venir appuyer sur le bord inférieur de cette surface et faire pivoter le cliquet 14 autour de l'axe 15. La denture 16 quitte la denture du secteur 12 et supprime le verrouillage des plaques 10 et ferrure 4.

La colonne de direction est alors libre de pivoter autour de l'axe 7 et il suffit au conducteur tenant le volant 2, de ses deux mains, de déplacer celuici pour l'amener dans la position qui lui paraît la plus correcte en fonction de son attitude propre. Dès que cette position est obtenue, la tige de manoeuvre 42 est libérée et le ressort 38 rappelle cette tige et ramène le levier 32 contre une butée 41 de la plaque 10. Le pion 34 aidé par le ressort 22 fait alors basculer la came 20, de sorte que le bras 24 fait pivoter la came 26, tandis que le bossage 19 repousse la denture 16 en position de verrouillage avec le secteur denté 12. L'ensemble de la colonne de direction est ainsi immobilisé par rapport à la ferrure de support 4, dans la position désirée.

Le réglage de la colonne a ainsi été effectué par un conducteur se trouvant exactement dans la position de conduite et sans que le volant soit lâché. Un tel réglage peut donc être effectué exactement en fonction de l'attitude désirée par le conducteur. Il peut même être effectué à différents moments d'un même parcours, si la nature de ce parcours exige des attitudes différentes du conducteur. Dans tous les cas le verrouillage est automatiquement rétabli dès que la tige de manoeuvre est relâchée. Les commandes annexes restent cependant tout aussi accessibles que si le dispositif de réglage n'existait pas. De la même manière, la colonne peut supporter un dispositif antivol classique monté dans un tube fixé latéralement sur le tube de direction 1, ainsi qu'indiqué en 44 sur la figure 4.

La résistance de la colonne de direction est toutefois de préférence renforcée en reliant la plaque 10 à la ferrure de support 4, par deux compas articulés latéraux, rendus solidaires l'un de l'autre par des traverses, comme le montre la figure 7. Chacun des compas est en effet constitué par deux biellettes, 46 et 48, articulées entre elles en 49, la biellette 46 étant en outre articulée en 50 sur la plaque 10, tandis que la biellette supérieure 48 est articulée en 52 sur la ferrure de support 4. En outre les deux biellettes inférieures 46 sont rendues solidaires l'une de l'autre au voisinage de leur partie supérieure par une traverse 54, tandis que les biellettes supérieures 48 sont reliées entre elles, à proximité de leur articulation 49, par une traverse 56 légèrement décalée par rapport à l'axe d'articulation 49. L'articulation formée par les deux compas réunis par les traverses 54, 56, donne à l'ensemble de la colonne une grande rigidité contre les efforts exercés latéralement. En conséquence, même lorsque le cliquet 14 est déverrouillé, la colonne de direction reste stable.

En outre, en cas de choc ou lorsqu'un effort anormal est exercé sur l'antivol, les articulations résistent et évitent la transmission de cet effort au dispositif de verrouillage et aux organes de commande annexes, qui risqueraient autrement d'être détériorés.

Il est bien évident que la modification de la position en hauteur de la colonne de direction peut également être utilisée pour faciliter l'accès dans le véhicule ou la sortie hors de celui-ci, le déplacement de la tige de manoeuvre 42 pouvant être effectué tout aussi facilement dans ces conditions.

De préférence un ressort 60 est monté entre la plaque de support 10 et la ferrure 4 et tend à rapprocher ces deux organes, c'est-à-dire à soulager l'articulation de la colonne.

## Revendications

1. Colonne de direction traversée par un arbre de direction articulé à son extrémité inférieure et solidaire d'un volant (2) à son extrémité supérieure, articulée sur un support fixe (4) autour d'un axe horizontal coaxial à l'axe d'articulation de l'arbre de direction, un dispositif de verrouillage (12, 14, 20) permettant de verrouiller la colonne de direction dans plusieurs positions correspondant à différentes inclinaisons de cette dernière par rapport à l'horizontale, caractérisée en ce que le dispositif de verrouillage (12, 14, 20) est monté entre une plaque (10) de support de commandes annexes solidaire de la colonne de direction et le support fixe (4), et en ce que cette plaque (10) supporte un levier coudé (32) pivotant parallèlement à celle-ci entre un position de repos écartée du dispositif de verrouillage, une position d'engagement avec le dispositif de verrouillage et une position de déverrouillage, une tige courbe de manoeuvre (42) étant fixée au levier coudé (32) de telle façon que son extrémité soit largement en retrait par rapport au volant (2) lorsque le levier coudé (32) est dans sa position de repos et à proximité immédiate du volant (2) lorsque le levier coudé (32) est dans ses deux autres positions, le levier coudé étant rappelé élastiquement dans sa position de repos correspondant au verrouillage de la colonne, dès qu'il est libéré par le conducteur.

2. Colonne de direction suivant la revendication 1, caractérisée en ce que le levier de déverrouillage (32) pivote autour d'un axe perpendiculaire à la plaque (10) et situé au voisinage du volant de direction.

3. Colonne de direction suivant la revendication 2, caractérisée en ce que l'axe de pivotement du levier de déverrouillage (32) est formé par l'extrémité recourbée (39) d'un tige (36) qui est solidaire du levier et traverse la plaque (10), un ressort de rappel (38) entourant cette extrémité recourbée de la tige.

4. Colonne de direction suivant l'une des revendications 1 à 3, caractérisée en ce que le levier de déverrouillage (32) comporte un bras latéral de manoeuvre (33) terminé par un pion (34) qui coopère avec une came de déverrouillage (26), mais est éloigné de cette came dans la position de repos du levier.

5. Colonne de direction suivant la revendication 4, caractérisée en ce que la came de déverrouillage (26) pivote parallèlement à elle-même, à la plaque (10) et au levier (32), et comporte deux encoches extrêmes recevant respectivement le pion du bras de manoeuvre et l'extrémité d'un organe basculant (24) du dispositif de verrouillage.

6. Colonne de direction suivant l'une des revendications 1 à 5, caractérisée en ce que le dispositif de verrouillage comporte un secteur denté (12) sensiblement perpendiculaire au support fixe (4) et centré sur l'articulation de la colonne, et un cliquet denté (14) maintenu en prise avec le secteur (12) par une came basculante (20) ayant un bras (24) dans l'encoche de la came de déverrouillage, et rappelé par un ressort (22) en position de verrouillage.

7. Colonne de direction suivant l'une des revendications 1 à 6, caractérisée en ce que le support fixe (4) et la plaque (10) sont reliés entre eux par un double compas renforcé par des traverses rigides (54, 56).

## Patentansprüche

1. Lenksäule, die von einer an ihrem unteren Ende angelenkten und an ihrem oberen Ende mit einem Lenkrad (2) fest verbundenen Welle durchquert und an einem feststehenden Träger (4) an einer zur Anlenkachse der Lenkwelle koaxialen waagerechten Achse angelenkt ist, wobei eine Verriegelungsvorrichtung (12, 14, 20) eine Verriegelung der Lenksäule in mehreren Stellungen ermöglicht, die verschiedenen Neigungen der letzteren gegenüber der Waagerechten entsprechen, dadurch gekennzeichnet, daß die Verriegelungsvorrichtung (12, 14, 20) zwischen einer mit der Lenksäule fest verbundenen Tragplatte (10) für angebaute Steuerungen und dem feststehenden Träger (4) eingebaut ist, und daß diese Platte (10) einen Winkelhebel (32) trägt, der parallel zu ihr schwenkbar ist zwischen einer von der Verriegelungsvorrichtung entfernten Ruhestellung, einer Stellung für einen Eingriff mit der Verriegelungsvorrichtung und einer Entriegelungsstellung, wobei eine gekrümmte Betätigungsstange (42) am Winkelhebel (32) derart befestigt ist, daß ihr Ende gegenüber dem Lenkrad (2) weit zurückgezogen ist, wenn der Winkelhebel (32) sich in seiner Ruhestellung befindet, und sich in unmittelbarer Nähe zum Lenkrad (2) befindet, wenn der Winkelhebel (32) sich in seinen beiden anderen Stellungen befindet, wobei der Winkelhebel in der Ruhestellung entsprechend der Verriegelung der Lenksäule elastisch zurückgestellt wird, sobald er vom Fahrer freigegeben wird.

2. Lenksäule nach Anspruch 1, dadurch gekennzeichnet, daß der Entriegelungshebel (32) um eine zur Platte (10) senkrechte Achse schwenkbar ist und sich in Nähe des Lenkrads befindet.

3. Lenksäule nach Anspruch 2, dadurch gekennzeichnet, daß die Schwenkachse des Entriegelungshebels (32) durch das umgebogene Ende (39) einer Stange (36) gebildet ist, die mit den Hebel fest verbunden ist und die Platte (10) durchquert, wobei eine Rückstellfeder (38) dieses umgebogene Ende der Stange umgibt.

4. Lenksäule nach einem der Ansprüche 1 bis 3, dadurch gekennzeichnet, daß der Entriegelungshebel (32) einen seitlichen Betätigungsarm (33) aufweist, der mit einem Stift (34) endet, der mit einem Entriegelungsnocken (26) zusammenarbeitet, jedoch in der Ruhestellung des Hebels von diesem Nocken entfernt ist.

5. Lenksäule nach Anspruch 4, dadurch gekennzeichnet, daß der Entriegelungsnocken (26) parallel zu sich, zur Platte (10) und zum Hebel (32) schwenkbar ist und zwei Ausschnitte aufweist, die den Stift des Betätigungsarms bzw. das Ende eines Schwenkorgans (24) der Verriegelungsvorrichtung aufnehmen.

6. Lenksäule nach einem der Ansprüche 1 bis 5, dadurch gekennzeichnet, daß die Verriegelungsvorrichtung aufweist: einen verzahnten Sektor (12), der im wesentlichen senkrecht zum feststehenden Träger (4) und auf der Anlenkung der Lenksäule zentriert ist, und eine verzahnte Sperrklinke (14), die mit dem Sektor (12) durch einen Schwenknocken (20) in Eingriff gehalten wird, von dem ein Arm (24) sich im Ausschnitt des Entriegelungsnockens befindet und durch eine Feder (22) in die Verriegelungsstellung zurückgestellt wird.

7. Lenksäule nach einem der Ansprüche 1 bis 6, dadurch gekennzeichnet, daß der feststehende Träger (4) und die Platte (10) durch einen doppelten Kniehebel miteinander verbunden sind, der durch starre Traversen (54, 56) verstärkt ist.

## Claims

1. A steering column through which extends a steering shaft which is articulate at its lower end and connected to a steering wheel (2) at its upper end, the column being mounted on a fixed support (4) to pivot about a horizontal axis coaxial with the pivot axis of the steering shaft, a locking device (12, 14, 20) enabling the steering column to be locked in a plurality of positions corresponding to different inclinations of the steering column relative to the horizontal, characterised in that the locking device (12, 14, 20) is mounted between a support plate (10) for accesory controls connected to the steering column and the fixed support (4), and this plate (10) supports a cranked lever (32) which is pivotable in a direction parallel to the support plate (10) between a position of rest spaced away from the locking device, a position of engagement with the locking device and an unlocking position, a curved actuating rod (42) being fixed to the cranked lever (32) in such manner that its end is distinctly set back relative to the steering wheel (2) when the cranked lever (32) is in its position of rest and is in the immediate vicinity of the steering wheel (2) when the cranked lever (32) is in its other two positions, the cranked lever being resiliently biased toward its position of rest corresponding to the locking of the column, as soon as it is released by the driver.

2. A steering column according to claim 1, characterised in that the unlocking lever (32) is pivotable about an axis perpendicular to the plate (10) and located in the vicinity of the steering wheel.

3. A steering column according to claim 2, characterised in that the pivot axis of the unlocking lever (32) is constituted by the curved end portion (39) which is connected to the lever and extends through the plate (10), a return spring (38) surrounding this curved end portion of the rod.

4. A steering column according to one of the claims 1 to 3, characterized in that the unlocking lever (32) includes a lateral actuating arm (33) which terminates in a pin (34) cooperating with an unlocking cam (26) but spaced away from this cam in the position of rest of the lever.

5. A steering column according to claim 4, characterised in that the unlocking cam (26) pivots in a direction parallel to itself, to the plate (10) and to the lever (32) and includes two end notches respectively receiving the pin of the actuating arm and the end of a rocking element (24) of the locking device.

6. A steering column according to one of the claims 1 to 5, characterised in that the locking device comprises a toothed sector (12) substantially perpendicular to the fixed support (4) and centered on the articulation of the column, and a toothed pawl (14) maintained in engagement with the sector (12) by a rocking cam (20) having an arm (24) in the notch of the unlocking cam and returned by a spring (22) to the locking position.

7. A steering column according to one of the claims 1 to 6, characterised in that the fixed support (4) and the plate (10) are interconnected by a double compass reinforced by rigid cross-members (54, 56).

FIG.1

0 050 999

FIG.2

0 050 999

FIG.3

FIG.4

FIG.5

## FIG.6

## FIG.7

FIG.8